# EUROPEAN PATENT SPECIFICATION

(11) **EP 2 404 498 B1**
(45) Date of publication and mention of the grant of the patent: **21.02.2018**
(21) Application number: 11004148.0
(22) Date of filing: 19.05.2011
(51) Int. Cl.: A01G 9/12

(54) **Improved tomato hook and method and device for the manufacture thereof**
Verbesserter Tomatenhaken sowie Verfahren und Vorrichtung zu dessen Herstellung
Crochet amélioré pour tomates et procédé et dispositif de fabrication associés

(30) Priority: 08.07.2010 BE 201000412
(43) Date of publication of application: 11.01.2012
(73) Proprietor: Sebrechts, Jan Alfons E., 2520 Broechem (BE); Sebrechts, Jozef, 2520 Broechem (BE)
(72) Inventor: Sebrechts, Jan Alfons E., 2520 Broechem (BE); Sebrechts, Jozef, 2520 Broechem (BE)
(74) Representative: Donné, Eddy

(56) References cited:
- EP-A1- 0 507 378
- EP-A1- 1 491 087
- FR-A1- 2 680 446

## Description

This invention relates to an improved tomato hook and a device and method for the manufacture of such an improved tomato hook.

It is known to guide plants, for example tomato plants, along a suspended cord during their growth, whereby this cord is extended and moved as the plant grows, so that the plant gradually becomes horizontal and so that the plants can reach a greater length, which correspondingly results in a large yield.

It is also known that tomato hooks are used for this purpose, for example as described in EP 0.507.378 and EP 2.005.815 by the same applicant, and these tomato hooks consist of a holder and a cord attached to this holder, whereby the cord is equipped with two reserves, respectively a first reserve that is completely wound around the holder and which is intended to be systematically unwound, and a second reserve containing a set length of cord, and this second reserve is at least partially wound next to the aforementioned holder and can be completely released from the holder in one go, and whereby this second reserve is held together by auxiliary means provided to this end.

These auxiliary means can have many different embodiments, as described in the above two documents, for example a piece of elastic, a small grip, or a paper casing that can be fastened to the tomato hook or otherwise.

At the start of the growth, the tomato hook is hitched above the plant concerned to a suspension construction provided to this end, for example a taut wire at the top of the greenhouse.

Then the aforementioned auxiliary means are removed or loosened, all such that this second reserve of cord is released from the holder in one go, i.e. completely and without unwinding.

The aforementioned "set length" is such that it practically or completely reaches the plant. During the growth, the plant is guided by means of the cord. As the growth of the plant advances, the holder is moved sideways by always placing it in another place further from the base of the plant, whereby a number of windings of the first reserve of cord are unwound from the holder each time.

Such tomato hooks can be quickly and efficiently suspended in a greenhouse, without the second quantity of cord having to be unwound manually.

A disadvantage of such known tomato hooks, however, is that the auxiliary means have a certain cost price, and thus increases the cost price of the tomato hook.

A further disadvantage of known tomato hooks is that the affixing of the auxiliary means is a separate production stage, for which supplementary equipment and/or people have to be provided.

A further disadvantage of the known tomato hooks is that the removal of the auxiliary means is experienced as difficult by the users, costs time and requires a certain dexterity.

Also the known tomato hooks have the disadvantage that after hanging the tomato hooks the auxiliary means have to be removed, which again requires a certain quantity of work and increases the quantity of waste.

A further disadvantage of such tomato hooks is that the user of the hook, in order to remove the auxiliary means, always has to exert a certain force that is relatively large, which can be tiring, certainly when very many tomato hooks have to be hung.

A further system is known from EP 1.491.087, in which one or more tomato hooks and a carrier for these hooks are combined into an assembly, whereby the second reserve is held in place between the carrier and the rest of the tomato hook, until the time of use, so that the carrier becomes the auxiliary means.

The aforementioned disadvantages related to provision of the auxiliary means and the disposal thereof are of course also applicable to the assembly of EP 1.491.087.

The purpose of the present invention is to provide a solution to one or more of the aforementioned and other disadvantages.

To this end the invention concerns an improved tomato hook that comprises a holder and a cord attached to the holder, whereby the cord has two reserves, respectively a first reserve that is completely affixed in windings around a winding core of the holder, and which is intended to be systematically unwound, and a second reserve of a set length of cord, and this second reserve is at least partially wound next to the aforementioned holder and can be released from the holder completely in one go, in which the second reserve is clasped between the holder and the windings of the first reserve, or between two sections of the windings of the first reserve.

An advantage of such an improved tomato hook according to the invention is that it can be manufactured very easily, quickly and cheaply: in particular no further means are needed and the second reserve can be automatically held together in a suitable winding machine, thus without the tomato hook having to be transported to another machine or an extra operation being required.

The improved tomato hook according to the invention also has the advantage that little force is required to release the second reserve of cord.

Another advantage is that the installation of the tomato hook according to the invention causes absolutely no waste.

A further advantage is that the release of the second reserve does not require an extra operation. As a result, no special skills are required and time is saved.

In a specific embodiment the second reserve is clasped with such a force that a slight hand movement is sufficient to release the second reserve.

In a further specific embodiment, the two parts are two sections of the windings of the first reserve. Here the second reserve is held between the windings of the first reserve.

This has the advantage that the clasping force can be lower than when the second reserve is clasped between the holder and the first reserve, and the release of the second reserve is thus easier. This also has the advantage that, by varying the number of windings of the first reserve between which the second reserve is held, the clasping force, and thus also the force for releasing the second reserve, can be varied.

In a further preferred embodiment, the second reserve is clasped with such a force that the tomato hook is suitable for use in combination with a taut line at a height.

If the force required to release the second reserve is too great, there is the risk that the tomato hooks suspended from a taut wire will slip off the wire due to it acting as a bowstring when releasing the second reserve.

In a further preferred embodiment, the second reserve is clasped between two sections of the windings of the first reserve, whereby these sections consist of a first section that is the closest to the end of the cord that is tied to the holder, and a second section that is the closest to the free end of the cord, and whereby the second section consists of two, three, four or five windings.

It has turned out that in this preferred embodiment, it rarely, if ever, slips off the taut thread, while the second reserve is nonetheless sufficiently securely clasped.

In a further preferred embodiment, the second reserve is wound completely next to the winding core.

This has the advantage that completely releasing the reserve in one go is even easier and there is less risk of the second reserve left hanging on the holder.

Alternatively the second reserve can also be wound around a part of the winding core.

In a specific embodiment, the holder consists of a wire folded in one plane and the second reserve runs through the plane defined by at least one of the windings of the first reserve.

The invention further relates to a set of two or more tomato hooks ready for hanging according to any of the previous claims, whereby the tomato hooks are similar to one another.

As a set, the tomato hooks are ready for use in a tomato nursery, by attaching them to a suspension construction secured at a height of a few metres, which normally speaking is done by a person who takes a set of tomatoes on a raised construction in order to be able to hang a number of them without having to make a vertical movement each time.

Because from a cost point of view the person has to do this work quickly, it is desirable for the tomato hooks to be similar, so that each time the person can do precisely the same operations with the same exerted force.

In practice this is achieved with completely ready-for-use tomato hooks according to the invention made beforehand that are also manufactured automatically by machine.

The present invention also relates to a device for making tomato hooks according to the invention, primarily consisting of a winding mechanism and a clamp for securing a holder, whereby the clamp and the winding mechanism can alternate with respect to one another between at least two orientations that enable a first reserve of cord to be wound on to the holder and a second reserve of cord can be wound at least partly next to the holder, whereby means are provided that can place the second reserve at least partly between the holder and the windings of the first reserve or between two sections of the windings of the first reserve.

This device enables tomato hooks to be easily produced, and enables the hooks to be produced reproducibly.

In a preferred embodiment, the means comprise a clasp that can move approximately in the normal direction of the winding plane of the winding mechanism. Preferably this clasp has a fixed part and a moving part, whereby the moving part has an open and closed position, and in the closed position it closes off a recess in the fixed part that is intended for surrounding at least a part of the second reserve.

The present invention also relates to a method for manufacturing an improved tomato hook, which at least comprises the following steps:
- the fastening of a cord to a holder;
- the winding of a first reserve of the cord on a winding core of the holder

- the winding of a second reserve of the cord, at least partially next to the holder.
- the clasping of the second reserve and the placing of the second reserve at least partly up to between the holder and the windings of the first reserve or between two sections of the windings of the first reserve.

The invention also relates to a method for providing a set of tomato hooks suspended from a suspension construction that each comprise a holder and a cord attached to the holder, whereby the cord has two reserves, respectively a first reserve that is completely affixed around a winding core of the holder in windings and which is intended to be systematically unwound, and a second reserve of a set length of cord that hangs free from the holder, whereby a number of tomato hooks according to the invention are hung from the suspension construction, and the second reserve is released from each holder.

Such a method is useful in tomato nurseries, to prepare for the growth and fruit-bearing of young tomato plants, each guided by a cord.

With the intention of better showing the characteristics of the invention, a few preferred embodiments of an improved tomato hook according to the invention, as well as a method and device for manufacturing such an improved tomato hook, are described hereinafter by way of an example, without any limiting nature, with reference to the accompanying drawings, wherein:
figure 1 schematically shows a view of a tomato hook according to the invention;
figure 2 shows an alternative embodiment of the tomato hook according to the invention;
figure 3 shows another alternative embodiment of the tomato hook according to the invention;
figure 4 shows the main components of a device for manufacturing the tomato hook according to figure 1, as well as the starting situation of a method for manufacturing this tomato hook;
figure 5 shows a side view, in greater detail and on a larger scale, of the component of the device of figure 3 that is indicated with F4;
figures 6-8 show successive steps in the method for manufacturing the tomato hook of figure 1;
figure 9 shows the main components of a device for manufacturing the tomato hook according to figure 3, as well as a step of a method for manufacturing this tomato hook; and
figures 10 and 11 show successive steps in the method for manufacturing the tomato hook of figure 3.

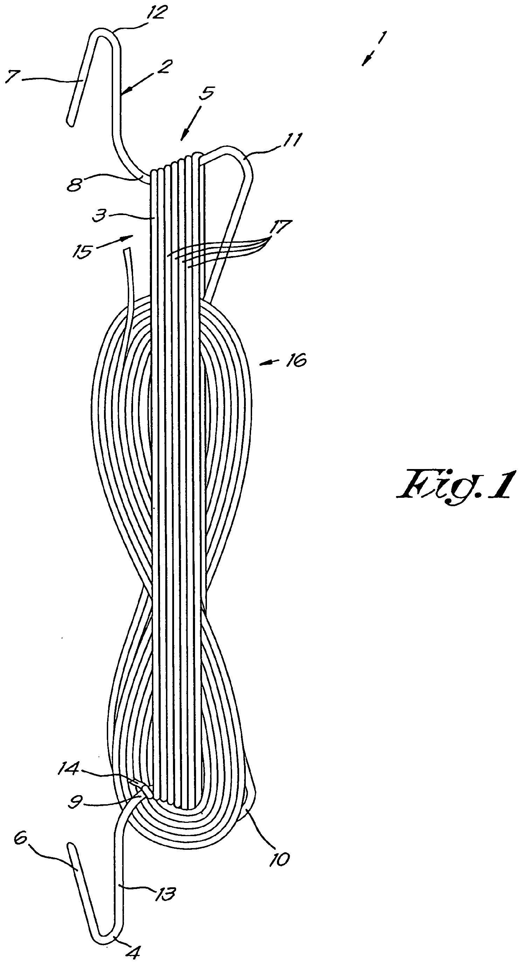

Figure 1 shows an improved tomato hook 1 according to the invention that has a holder 2 and a cord 3 attached to the holder 3.

In the embodiment of figure 1 the holder 2 is formed from a folded steel wire 4 or similar. The holder 2 hereby presents a winding core 5 and two hooks 6 and 7. The winding core 5 is formed from two inward-folded parts 8 and 9 that are bordered by raised edges 10-11 and 12-13.

The hooks 6 and 7 enable the tomato hook to be hung from a wire or other suspension points in a greenhouse.

The cord is attached to the holder by means of a knot 14 or similar, and has two reserves, respectively a first reserve 15 that is intended to be systematically released by means of unwinding, and a second reserve 16 with a set length, and this second reserve 16 can be released from the holder 2 in one go, i.e. completely released by a single operation and without unwinding.

To this end the first reserve 15 is wound completely around the holder 2 in repeated windings 17, more specifically on the winding core 5, and due to the presence of the raised edges 10 to 13 it can only be released by systematically unwinding the cord.

The aforementioned second reserve 16 presents a set length - which means a pre-measured length - that is sufficient to practically completely span the distance between a taut wire from which an improved tomato hook 1 is suspended at the top of a greenhouse on the one part, and on the other a plant that has to be guided by the cord 3.

In order to prevent the second reserve 16 coming away, the second reserve 16 is placed partly between the holder 2 and the first reserve 15, between which this second reserve 16 is lightly clasped.

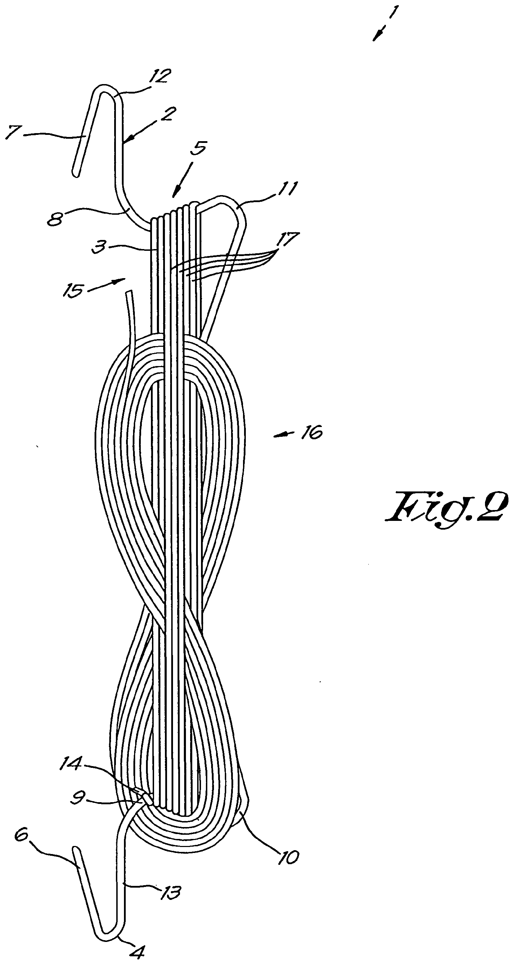

As shown in figure 2, the second reserve 16 can also be placed and clasped between a first part and a second part of the windings 17 of the first reserve 15.

The second reserve 16 of the cord 3 is at least partially wound next to the winding core 5, through it being wound onto it on one side, as shown in figures 1 and 2, and the other side being wound next to it, i.e. not on it.

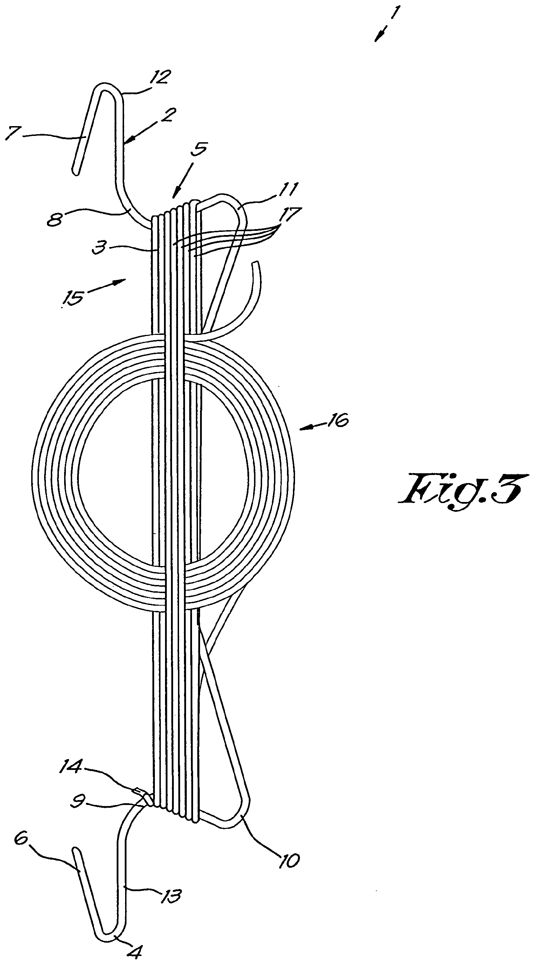

The second reserve 16 can also be entirely wound next to the winding core, thus without making use of the winding core 5, as shown in figure 3.

The word 'next to' here does not mean a relative position of the second reserve 16 with respect to the total winding core 5, but indicates that the second reserve 16 or the part of it concerned is not wound on the winding core 5.

The use of an improved tomato hook 1 according to the invention is very simple and as follows.

The tomato hook 1 is hitched, by means of the hook 6 or 7, to a support, such as a taut wire above the plant to be guided. In order to ensure that the cord 3 reaches the plant, it is sufficient to push or pull, and then release, the second reserve 16 from the position between the holder 2 and the first reserve 15, resulting in the second reserve 16 coming loose and unravelling downwards.

If the second reserve 16 is completely wound next the holder 2, the tomato hook 1 can be suspended with either of the hooks 6 or 7, but if the second reserve 16 is wound with one side on the winding core 5, as is the case with the embodiment of figure 1, the tomato hook 1 has to be suspended from the support such that the side of the winding core 5 in which the second reserve 16 is wound is oriented downwards, as shown in figure 1.

In this example the tomato hook 1 is thus suspended with the hook 7.

In the way described above, a considerable amount of time is saved compared to the known tomato hooks in which auxiliary means have to be loosened or removed.

During the growth of the plant the holder 2 is systematically moved sideways along the support or wire and the first reserve 15 is systematically unwound as more cord 3 is required for guiding the plant.

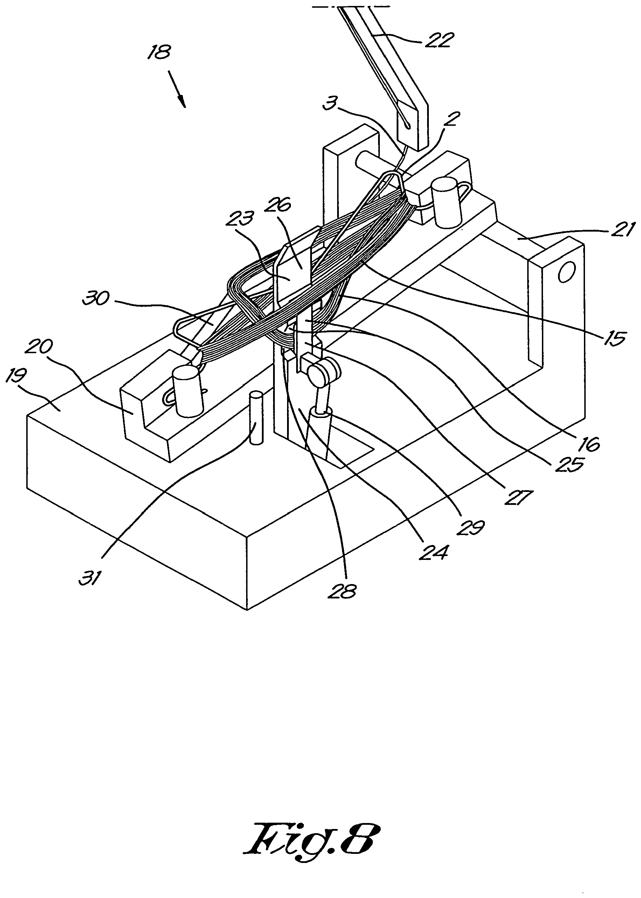

The improved tomato hook according to the invention can be produced in a device largely as shown in figures 8 to 10 of EP 0.507.378 B1 and described in the accompanying description, column 4 line 35 to column 5 line 45.

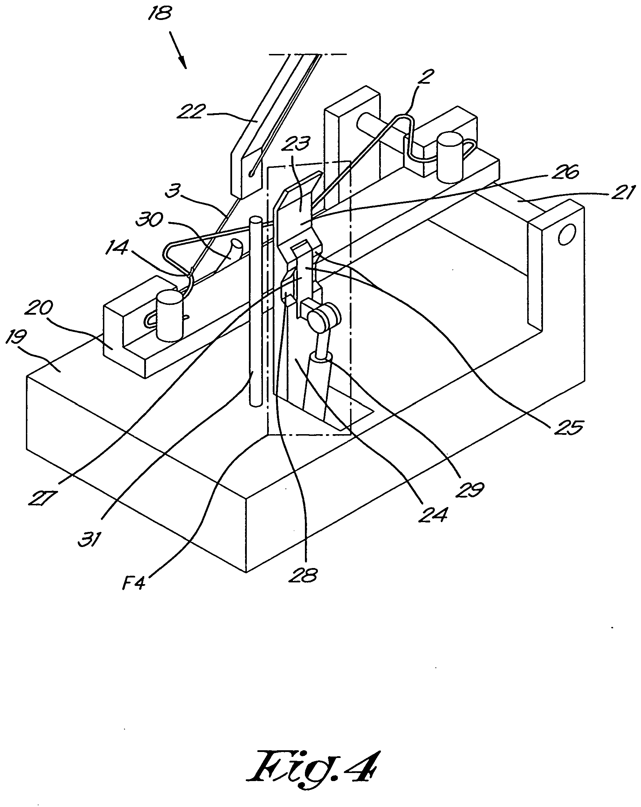

The device 18 as shown in figure 4 comprises a frame 19 on which a clamp 20 for a holder 2 is mounted. The clamp 20 can be rotated around shaft 21 and is primarily to be used in two positions, a first position in which both inward-folded parts 6 and 7 of a holder 2 placed in the clamp 20 are in or practically in the winding plane of a winding arm 22, and a second position in which the clamp 20 is tilted over an angle of 10-20° so that only one of the two inward-folded parts 6 or 7 is in the winding plane, and the other inward-folded part 6 or 7 is further away from the winding arm.

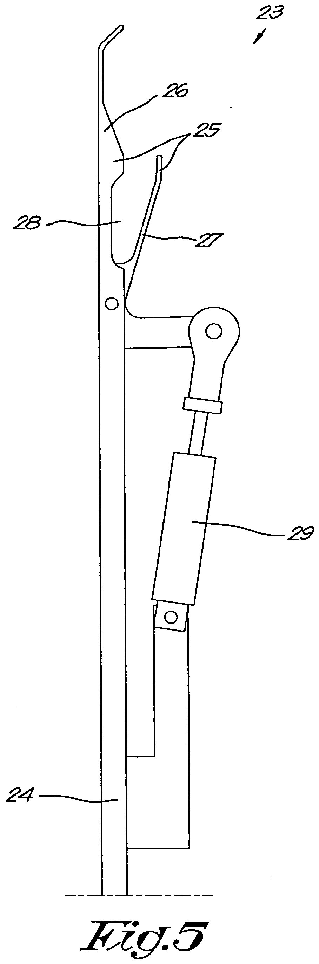

The device also comprises a clasp 23 containing a stem 24, a jaw 25 formed by the end 26 of the stem 20 and a movable part 27 whereby the jaw 25 can open and close. In the end 26 there is a recess 28, which in a closed position of the jaw 25 forms a hole completely surrounded by the end 22 and the movable part 27. There is a drive 29 to move the movable part 27 and thus to open and close the jaw 25. Figure 5 shows the clasp 23 and its components.

The clasp 23 is mounted such that it extends approximately in the normal direction of the winding plane, i.e. the plane defined by the circumscribing movement of the end of winding arm 22, and is movable in this direction.

The clasp 23 is placed with respect to the clamping position of a holder 2 in the clamp 22 such that the clasp 23 is close to or even against the middle of the holder 2.

The device 18 comprises a first winding support 30 in the form of a hook, that is placed at some distance from the holder 2 and can be swung aside reversibly from the winding plane. A second winding support 31 in the form of a straight pin, is parallel to and close to the clasp 23 and the holder 2 and is movable in the same direction as the clasp 23.

The winding supports 30, 31 are independent from one another and movable from the clasp 23.

The method for producing the tomato hook 1 with device 18 is generally the same as the use of the device of figures 8 to 10 of EP 0.507.378 B1, described there in column 5, line 46 to column 6, line 6.

First a holder 2 is placed in the clamp 20 that is in its first position, and a cord 3 is tied to the holder 2. After that the clasp 23 and the second winding support 31 are placed next to the holder. This is shown in figure 4.

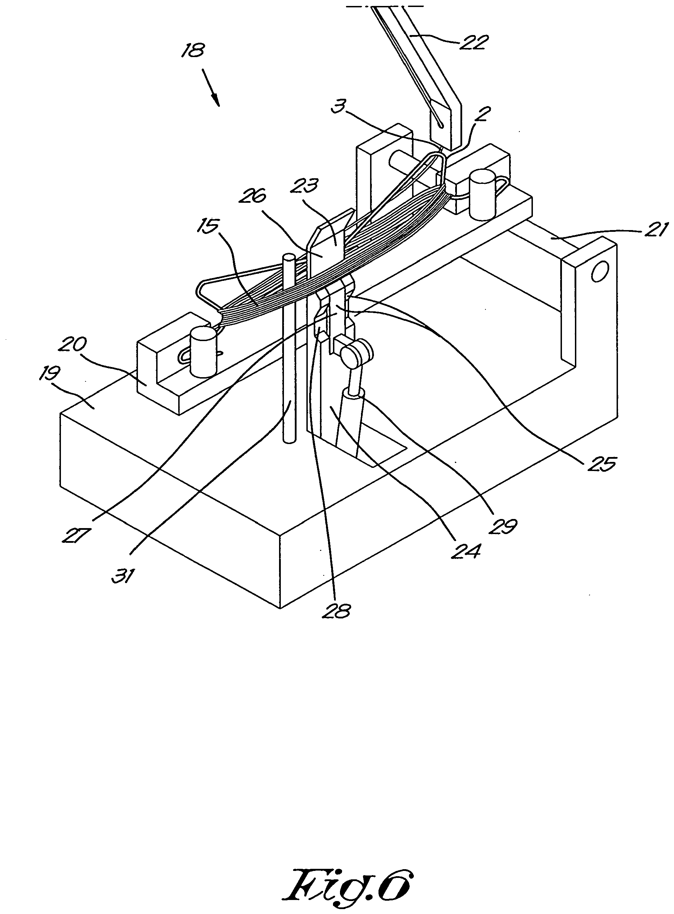

After this, the winding of the first reserve 15 on to the winding core 5 is started by having the winding arm 22 turn around. The first reserve 15, at the same time as winding it around the winding core 5, is also wound around the clasp 23 and around the second winding support 31, as shown in figure 6.

When the winding of the first reserve 15 has been completed, the winding is temporarily interrupted, the clamp 20 is placed in its second position and the first winding support 30 is brought to the winding plane.

The winding is now continued, whereby the second reserve 16 is wound on the first winding support 30 and the inward-folded part 6 or 7 that is the closest to the shaft 21.

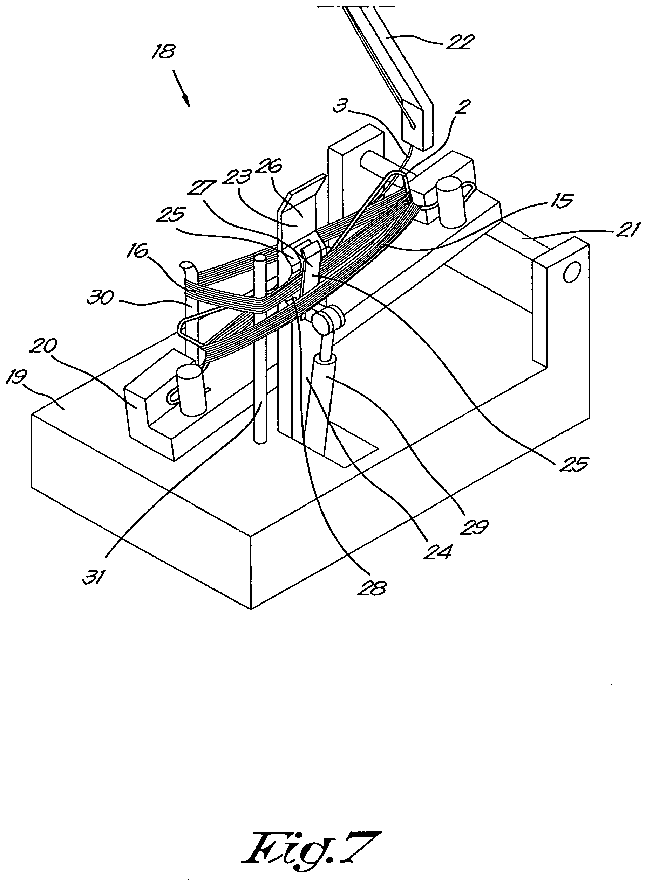

After winding the second reserve 16, the jaw 25 of the clasp 23 is opened, the clasp 23 is moved in the direction of the second reserve 16 until the second reserve 16 is between the end 26 of the movable part 27, as shown in figure 7, after which the jaw 25 is closed and the winding of the second reserve runs through the hole formed by the recess 28.

The function of the second winding support 31 is largely or entirely to keep the windings of the second reserve 16 clear of the moving clasp 23, so that this clasp 23 cannot bring the second reserve 16 out of position or damage it.

The winding supports 30 and 31 are now moved away from the holder 2 and the winding plane.

The clasp 23 is then moved in the reverse direction whereby a part in the second reserve 16 is pulled between the holder 2 and the windings 17 of the first reserve 15, and is clasped in between them. This clasping is not absolute, but is rather a loose clasping, such that the second reserve 16 can move between the windings 17 and the holder 2, without this directly resulting in a significant increase or decrease of the clasping force. This is shown in figure 8.

The jaw 25 of the clasp 23 is then opened, after which the clasp 23 is moved further in the same direction and the cord 3 is cut loose from the winding arm 22.

The tomato hook 1 as shown in figure 1 is now ready and can be removed from the device 18, a new holder 2 can be placed in the device 18 and the method can be executed again.

Preferably around half of the second reserve 16 is fed through the space between the windings 17 and the holder 2. This has the advantage that relatively small movements, as can occur when transporting and hanging the tomato hook 1, do not result in the second reserve 16 accidentally being released prematurely, which can be done more easily if only a small part, or on the contrary a large majority, of the second reserve 16 is pulled through the space between the windings 17 and the holder 2.

Alternatively, to obtain the embodiment of the tomato hook 1 in figure 2, the winding support 31 in the clasp 23 is only placed next to the holder 2 when a part of the windings 17 of the first reserve 15 have already been made. As a result, the windings 17 are partly, and partly not, located around the clasp 23, whereby later, when moving a part of the second reserve 16, it is clasped between the windings 17 of the first reserve 15.

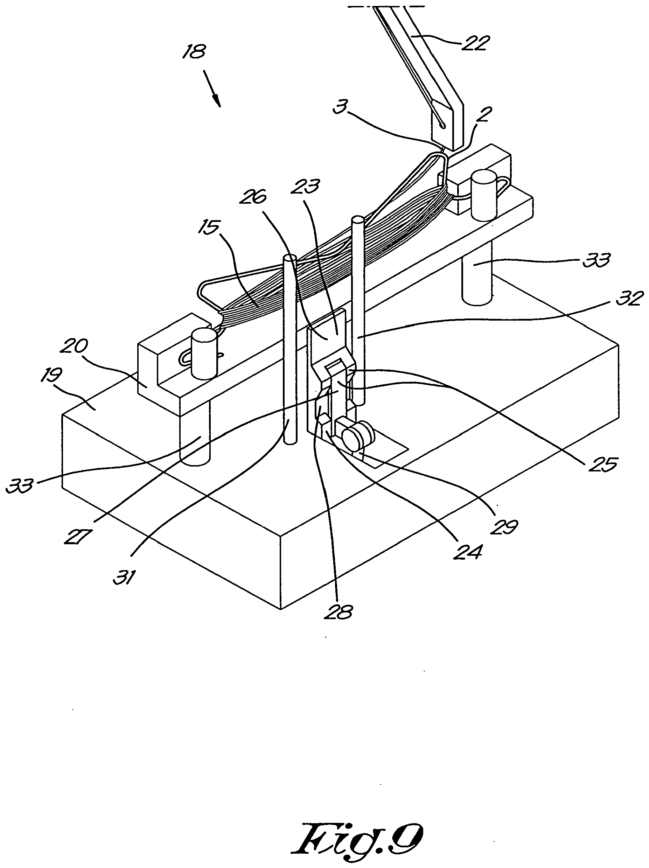

The tomato hook 1 according to figure 3 is manufactured in a variant of the device 18, according to a variant of the method described above. This is shown in figures 9 to 11.

In this case the device 18 contains a third winding support 32, which is placed on the other side of the clasp 23 to the second winding support 31. The clasp 23 is also constructed with a straight end, instead of a bent end.

The device 18 is also constructed such that, compared to the device 18 described above, there is no rotary shaft 21, but the holder 2 can be moved as a whole with respect to the winding arm 22 by a moving device 33, whereby the second position of the holder 2 is also correspondingly different.

The method for manufacturing the variant of the tomato hook 1 according to the invention with the variant of the device 18 departs from the method described above as follows.

When the clamp 20 is placed with the holder 2 in its first position and a cord 3 is tied to it, a part of the windings 17 of the first reserve 15 are first put in.

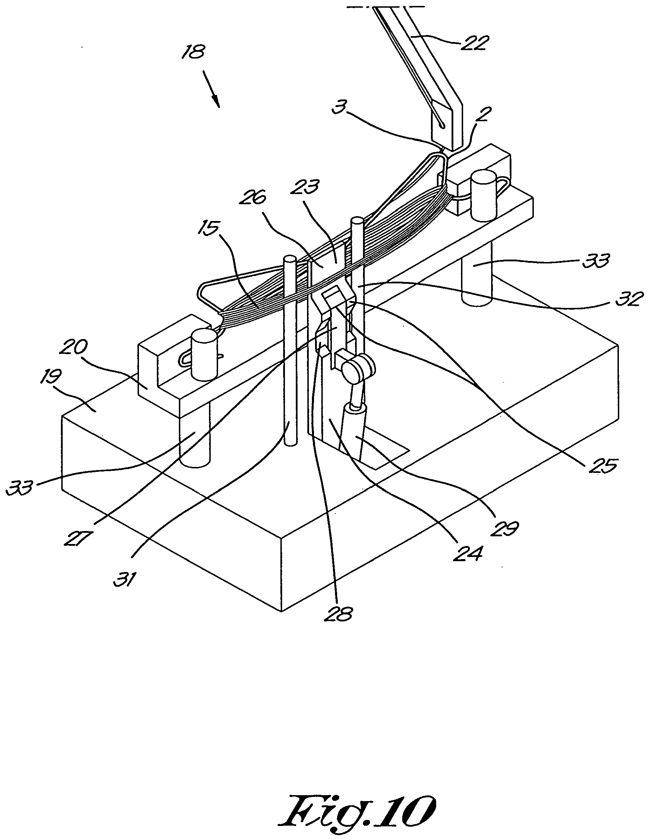

When, on the basis of the desired length of the cord 3 on the holder 2, a few windings 17, in this example three, are to be made, the second and third winding supports 31, 32 are placed next to the holder. This is shown in figure 9. Hereafter the windings of the first reserve are completed. This is shown in figure 10.

The clasp 23 can equally be placed with the second and third winding supports 31, 32 next to the holder 2, or after the winding of the first reserve 15 has been completed.

The clamp 20 is now placed in its second position by the moving device 33. In this second position, the clamp 20 is removed as a whole from the winding arm 22, whereby the winding core 5 as a whole is no longer in the winding plane of the winding arm 22.

The method now proceeds further as described above, with the difference that as a result of the position of the winding core, the second reserve 16 is wound entirely next to the winding core 5 on the first, second and third winding supports 30, 31, 32, and thus not on the inward-folded part 6 or 7.

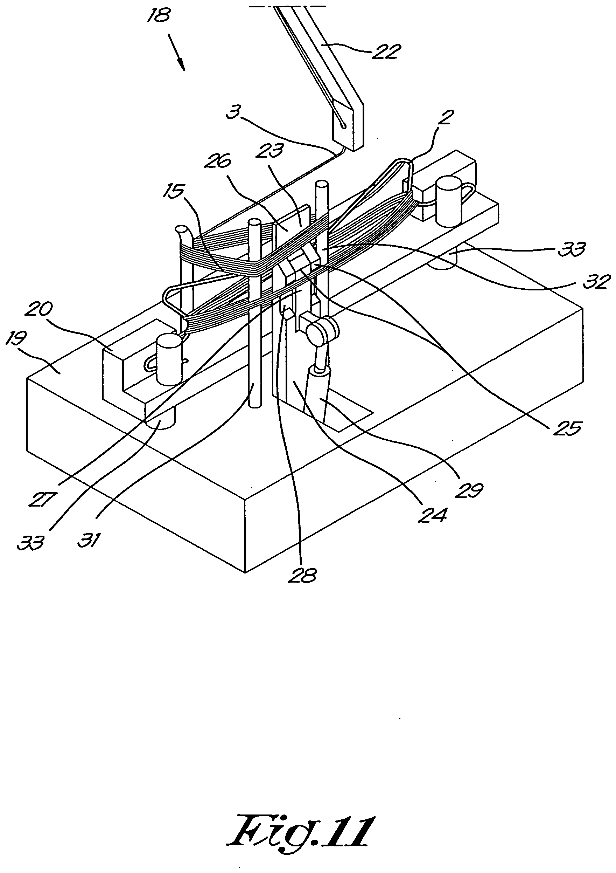

This is shown in figure 11.

The method is now completed as described above, whereby the second reserve 16 is pushed between two parts of the first reserve 15, i.e. a first part that is wound for placing the second and third winding support 31 and 32, and a part that is wound afterwards.

The tomato hook 1 according to the invention is so called because it is primarily used for the cultivation of tomatoes. However, the tomato hook can also be used for cultivating other plants, parts or fruit of them without departing from the scope of the invention, as defined in the appended claims.

The present invention is by no means limited to the embodiments and methods described as an example and shown in the drawings, but such an improved tomato hook and a device and method for manufacturing it can be realised in all kinds of variants, without departing from the scope of the invention, as defined in the appended claims.

## Claims

1. Improved tomato hook (1) that comprises a holder (2) and a cord (3) attached to the holder (2), whereby the cord (3) has two reserves, respectively a first reserve (15) that is completely affixed in windings (17) around a winding core (5) of the holder (2), and which is intended to be systematically unwound, and a second reserve (16) of a set length of cord (3), and this second reserve (16) is at least partially wound next to the aforementioned holder (2) and can be released from the holder (2) completely in one go, **characterised in that** the second reserve (16) is clasped between the holder (2) and the windings (17) of the first reserve (15), or between two sections of the windings (17) of the first reserve (15).

2. Improved tomato hook according to claim 1, **characterised in that** there is no auxiliary means to keep the second reserve (16) wound until when the tomato hook (1) is used.

3. Improved tomato hook according to claim 1 2, **characterised in that** the second reserve (16) is clasped with such a force that the tomato hook (1) is suitable for use in combination with a taut line at a height.

4. Improved tomato hook according to any of the previous claims, **characterised in that** the second reserve (16) is clasped between two sections of the windings (17) of the first reserve (15), whereby these sections consist of a first section that is the closest to the end of the cord (3) that is tied to the holder (2), and a second section that is the closest to the second reserve (16), and whereby the second section consists of two, three, four or five windings (17).

5. Improved tomato hook according to any of the previous claims, **characterised in that** the tomato hook (1) consists of a holder (2) and a cord (3) attached to the holder (2).

6. Improved tomato hook according to any of the previous claims, **characterised in that** the second reserve(16) is wound completely next to the winding core (5).

7. Set of two or more tomato hooks ready for hanging according to any of the previous claims, whereby the tomato hooks (1) are similar to one another.

8. Method for manufacturing an improved tomato hook according to any of the claims 1 to 7, **characterised in that** this method at least comprises the following steps:
- the fastening of a cord (3) to a holder (2);
- the winding of a first reserve (15) of the cord (3) on a winding core (5) of the holder (2);
- the winding of a second reserve (16) of the cord (3), at least partially next to the holder (2),
the clasping of the second reserve (16) and the placing of the second reserve (16) at least partly between the holder (2) and the windings (17) of the first reserve (15) or between two sections of the windings (17) of the first reserve (15).

9. Method according to claim 8, **characterised in that** a mechanical means (23) is used to clasp the second reserve (16) and to subsequently position it.

10. Method according to claim 8 or 9, **characterised in that** a means (23) for gripping the second reserve (16) is positioned at a time before the winding of the first reserve (15) has been completed, in such a position that at least a part of the first reserve (15) is wound around the means (23) and that the means (23) is moved after gripping the second reserve (16) in order to at least partly move the second reserve (16).

11. Method according to claim 10, **characterised in that** the means (23) is positioned at a time before the winding of the first reserve (15) has started.

12. Device (18) for implementing the method of any of the claims 8 to 11, primarily consisting of a winding mechanism (22) and a clamp (20) for gripping a holder (2), whereby the clamp (20) and the winding mechanism (22) can alternate between at least two positions with respect to one another, which enable a first reserve (15) of cord (3) to be wound on the holder (2), and a second reserve (16) of cord (3) can be wound at least partly next to the holder (2), **characterised in that** means (23) are provided that can place the second reserve (16) at least partly between the holder (2) and the windings (17) of the first reserve (15), or between two sections of the windings (17) of the first reserve (15).

13. Device according to claim 12, **characterised in that** the means comprise a clasp (23) that can move in approximately the normal direction of the winding plane of the winding mechanism (22) and which has a fixed part (26) and a moving part (27), whereby the moving part (27) has an open and a closed position and in the closed position closes off a recess (28) in the fixed part (26) that is intended for enclosing at least a part of the second reserve (16).

14. Device according to claim 13, **characterised in that** a winding support (31) is provided next to the clasp (23) that at least partly keeps the second reserve (16) clear of the clasp (23) until the time that the clasp (23) has gripped the second reserve (16).

15. Method for equipping a tomato nursery with a set of tomato hooks suspended from a suspension construction that each comprise a holder (2) and a cord (3) attached to the holder (2), whereby the cord (3) has two reserves, respectively a first reserve (15) that is affixed completely (17) around a winding core (5) of the holder (2) in windings, and which is intended to be systematically unwound, and a second reserve (16) of a set length of cord that hangs loose from the holder (2), **characterised in that** a set of tomato hooks (1) according to claim 1 is suspended from the suspension construction and the second reserve (16) of each holder (2) is released.

## Patentansprüche

1. Verbesserter Tomatenhaken (1), der eine Halterung (2) und eine an der Halterung (2) befestigte Schnur (3) umfasst, wobei die Schnur (3) zwei Vorräte aufweist, einen ersten Vorrat (15), der vollständig in Wicklungen (17) um einen Wickelkern (5) der Halterung (2) angebracht ist und der zum systematischen Abwickeln bestimmt ist, beziehungsweise einen zweiten Vorrat (16) einer bestimmten Länge von Schnur (3), welcher zweite Vorrat (16) mindestens teilweise neben der vorgenannten Halterung (2) aufgewickelt ist und in einem Mal vollständig von der Halterung (2) gelöst werden kann, **dadurch gekennzeichnet, dass** der zweite Vorrat (16) zwischen der Halterung (2) und den Wicklungen (17) des ersten Vorrats (15) oder zwischen zwei Teilbereichen der Wicklungen (17) des ersten Vorrats (15) eingeklemmt ist.

2. Verbesserter Tomatenhaken nach Anspruch 1, **dadurch gekennzeichnet, dass** kein Hilfsmittel vorhanden ist, um den zweiten Vorrat (16) aufgewickelt zu halten, bis der Tomatenhaken (1) benutzt wird.

3. Verbesserter Tomatenhaken nach Anspruch 1 oder 2, **dadurch gekennzeichnet, dass** der zweite Vorrat (16) mit einer solchen Kraft eingeklemmt ist, dass der Tomatenhaken (1) zur Anwendung in Kombination mit einer gespannten Leine auf einer Höhe geeignet ist.

4. Verbesserter Tomatenhaken nach einem der vorhergehenden Ansprüche, **dadurch gekennzeichnet, dass** der zweite Vorrat (16) zwischen zwei Teilbereichen der Wicklungen (17) des ersten Vorrats (15) eingeklemmt ist, wobei diese Teilbereiche aus einem ersten Teilbereich, der sich am dichtesten bei dem Ende der Schnur (3), das an der Halterung (2) angebunden ist, befindet, und einem zweiten Teilbereich, der sich am dichtesten bei dem zweiten Vorrat (16) befindet, bestehen, und wobei der zweite Vorrat aus zwei, drei, vier oder fünf Wicklungen (17) besteht.

5. Verbesserter Tomatenhaken nach einem der vorhergehenden Ansprüche, **dadurch gekennzeichnet, dass** der Tomatenhaken (1) aus einer Halterung (2) und einer an der Halterung (2) befestigten Schnur (3) besteht.

6. Verbesserter Tomatenhaken nach einem der vorhergehenden Ansprüche, **dadurch gekennzeichnet, dass** der zweite Vorrat (16) vollständig neben dem Wickelkern (5) aufgewickelt ist.

7. Satz von zwei oder mehr aufhängfertigen Tomatenhaken nach einem der vorhergehenden Ansprüche, wobei die Tomatenhaken (1) einander ähnlich sind.

8. Verfahren zur Herstellung eines verbesserten Tomatenhakens nach einem der Ansprüche 1 bis 7, **dadurch gekennzeichnet, dass** dieses Verfahren mindestens die folgenden Schritte umfasst:
- das Befestigen einer Schnur (3) an einer Halterung (2);
- das Aufwickeln eines ersten Vorrats (15) der Schnur (3) auf einen Wickelkern (5) der Halterung (2);
- das Aufwickeln eines zweiten Vorrats (16) der Schnur (3) mindestens teilweise neben der Halterung (2);
- das Greifen des zweiten Vorrats (16) und Anordnen des zweiten Vorrats (16) mindestens teilweise zwischen der Halterung (2) und den Wicklungen (17) des ersten Vorrats (15) oder zwischen zwei Teilbereichen der Wicklungen (17) des ersten Vorrats (15).

9. Verfahren nach Anspruch 8, **dadurch gekennzeichnet, dass** ein mechanisches Mittel (23) verwendet wird, um den zweiten Vorrat (16) zu greifen und ihn anschließend zu positionieren.

10. Verfahren nach Anspruch 8 oder 9, **dadurch gekennzeichnet, dass** ein Mittel (23) zum Ergreifen des zweiten Vorrats (16) zu einem Zeitpunkt positioniert wird, bevor das Aufwickeln des ersten Vorrats (15) abgeschlossen ist, in einer solchen Position, dass mindestens ein Teil des ersten Vorrats (15) um das Mittel (23) gewickelt ist, und dass das Mittel (23) bewegt wird, nachdem der zweite Vorrat (16) ergriffen worden ist, um den zweiten Vorrat (16) mindestens teilweise zu bewegen.

11. Verfahren nach Anspruch 10, **dadurch gekennzeichnet, dass** das Mittel (23) zu einem Zeitpunkt positioniert wird, bevor das Aufwickeln des ersten Vorrats (15) begonnen hat.

12. Vorrichtung (18) zur Durchführung des Verfahrens nach einem der Ansprüche 8 bis 11, im Wesentlichen bestehend aus einem Wickelmechanismus (22) und einer Klammer (20) zum Festhalten einer Halterung (2), wobei die Klammer (20) und der Wickelmechanismus (22) in Bezug zueinander zwischen mindestens zwei Positionen abwechseln können, die es ermöglichen, dass ein ersten Vorrat (15) von Schnur (3) auf die Halterung (2) aufgewickelt wird und dass ein zweiter Vorrat (16) von Schnur (3) mindestens teilweise neben der Halterung (2) aufgewickelt werden kann, **dadurch gekennzeichnet, dass** Mittel (23) vorgesehen sind, die den zweiten Vorrat (16) mindestens teilweise zwischen der Halterung (2) und den Wicklungen (17) des ersten Vorrats (15) oder zwischen zwei Teilbereichen der Wicklungen (17) des ersten Vorrats (15) anordnen können.

13. Vorrichtung nach Anspruch 12, **dadurch gekennzeichnet, dass** die Mittel eine Greifvorrichtung (23) umfassen, die sich in annähernd der Normalrichtung der Wickelebene des Wickelmechanismus (22) bewegen kann und die einen feststehenden Teil (26) und einen bewegenden Teil (27) aufweist, wobei der bewegende Teil (27) eine offene und eine geschlossene Position aufweist und in der geschlossenen Position eine Ausnehmung (28) in dem feststehenden Teil (26) abschließt, die zum Umgeben mindestens eines Teils des zweiten Vorrats (16) bestimmt ist.

14. Vorrichtung nach Anspruch 13, **dadurch gekennzeichnet, dass** eine Wickelstütze (31) neben der Greifvorrichtung (23) vorgesehen ist, die den zweiten Vorrat (16) mindestens teilweise von der Greifvorrichtung (23) frei hält, bis zu dem Zeitpunkt, zu dem die Greifvorrichtung (23) den zweiten Vorrat (16) ergriffen hat.

15. Verfahren zur Ausrüstung eines Tomatenzuchtbetriebs mit einem Satz von Tomatenhaken, die an einer Aufhängekonstruktion aufgehängt sind, die jeder eine Halterung (2) und eine an der Halterung (2) befestigte Schnur (3) umfassen, wobei die Schnur (3) zwei Vorräte aufweist, einen ersten Vorrat (15), der vollständig in Wicklungen (17) um einen Wickelkern (5) der Halterung (2) angebracht ist und der zum systematischen Abwickeln bestimmt ist, beziehungsweise einen zweiten Vorrat (16) einer bestimmten Länge von Schnur, die lose von der Halterung (2) herunterhängt, **dadurch gekennzeichnet, dass** ein Satz von Tomatenhaken (1) nach Anspruch 1 an der Aufhängekonstruktion aufgehängt wird und der zweite Vorrat (16) jeder Halterung (2) gelöst wird.

## Revendications

1. Crochet perfectionné pour tomates (1) qui comprend un dispositif de maintien (2) et un cordon (3) fixé au dispositif de maintien (2) ; dans lequel le cordon (3) possède deux réserves, respectivement une première réserve (15) qui est complètement fixée en enroulements (17) autour d'un mandrin d'enroulement (5) du dispositif de maintien (2) et qui est destinée à être systématiquement déroulée, et une seconde réserve (16) d'une longueur déterminée de cordon (3), et cette seconde réserve (16) est enroulée au moins en partie à côté du dispositif de maintien susmentionné (2) et peut être libérée du dispositif de maintien (2) complètement en une fois, **caractérisé en ce que** la seconde réserve (16) est attachée entre le dispositif de maintien (2) et les enroulements (17) de la première réserve (15), ou entre deux tronçons des enroulements (17) de la première réserve (15).

2. Crochet perfectionné pour tomates selon la revendication 1, **caractérisé par** l'absence de moyens auxiliaires pour maintenir la seconde réserve (16) enroulée jusqu'à ce qu'on utilise le crochet pour tomates (1).

3. Crochet perfectionné pour tomates selon la revendication 1 ou 2, **caractérisé en ce que** la seconde réserve (16) est attachée avec une force telle que le crochet pour tomates (1) est approprié pour son utilisation en combinaison avec une ligne tendue en hauteur.

4. Crochet perfectionné pour tomates selon l'une quelconque des revendications précédentes, **caractérisé en ce que** la seconde réserve (16) est attachée entre deux tronçons des enroulements (17) de la première réserve (15) ; dans lequel ces tronçons sont constitués par un premier tronçon qui est le plus proche de l'extrémité du cordon (3) qui est liée au dispositif de maintien (2) et par un second tronçon qui est le plus proche de la seconde réserve (16) ; et dans lequel le second tronçon est constitué par deux, trois, quatre ou cinq enroulements (17).

5. Crochet perfectionné pour tomates selon l'une quelconque des revendications précédentes, **caractérisé en ce que** le crochet pour tomates (1) est constitué par un dispositif de maintien (2) et par un cordon (3) fixé au dispositif de maintien (2).

6. Crochet perfectionné pour tomates selon l'une quelconque des revendications précédentes, **caractérisé en ce que** la seconde réserve (16) est enroulée complètement à côté du mandrin d'enroulement (5).

7. Jeu de deux crochets pour tomates ou plus prêts pour leur suspension selon l'une quelconque des revendications précédentes, dans lequel les crochets pour tomates (1) sont similaires l'un à l'autre.

8. Procédé pour la fabrication d'un crochet perfectionné pour tomates selon l'une quelconque des revendications 1 à 7, **caractérisé en ce que** ce procédé comprend au moins les étapes suivantes comprenant le fait de :
- fixer un cordon (3) à un dispositif de maintien (2) ;
- enrouler une première réserve (15) du cordon (3) sur un mandrin d'enroulement (5) du dispositif de maintien (2) ;
- enrouler une seconde réserve (16) du cordon (3) au moins en partie à côté du dispositif de maintien (2) ;
- attacher la seconde réserve (16) et placer la seconde réserve (16) au moins en partie entre le dispositif de maintien (2) et les enroulements (17) de la première réserve (15) ou entre deux tronçons des enroulements (17) de la première réserve (15).

9. Procédé selon la revendication 8, **caractérisé en ce qu'**un moyen mécanique (23) est utilisé pour le fait d'attacher la seconde réserve (16) et pour son positionnement ultérieur.

10. Procédé selon la revendication 8 ou 9, **caractérisé en ce qu'**un moyen (23) pour saisir la seconde réserve (16) est positionné, à un moment qui précède l'enroulement complet de la première réserve (15), dans une position telle qu'au moins une partie de la première réserve (15) est enroulée autour du moyen (23), et **en ce que** le moyen (23) est déplacé après la saisie de la seconde réserve (16), dans le but de déplacer au moins en partie la seconde réserve (16).

11. Procédé selon la revendication 10, **caractérisé en ce que** le moyen (23) est positionné à un moment qui précède le démarrage de l'enroulement de la première réserve (15).

12. Dispositif (18) pour la mise en oeuvre du procédé selon l'une quelconque des revendications 8 à 11, consistant principalement en un mécanisme d'enroulement (22) et en une pince (20) pour la saisie d'un dispositif de maintien (2) ; dans lequel la pince (20) et le mécanisme d'enroulement (22) peuvent alterner entre au moins deux positions l'un par rapport à l'autre, ce qui permet d'enrouler une première réserve (15) de cordon (3) sur le dispositif de maintien (2), et une seconde réserve (16) de cordon (3) peut être enroulée au moins en partie à côté du dispositif de maintien (2) ; **caractérisé en ce que** des moyens (23) sont prévus qui peuvent placer la seconde réserve (16) au moins en partie entre le dispositif de maintien (2) et les enroulements (17) de la première réserve (15), ou entre deux tronçons des enroulements (17) de la première réserve (15).

13. Dispositif selon la revendication 12, **caractérisé en ce que** les moyens comprennent une attache (23) qui peut se déplacer dans approximativement la direction normale du plan d'enroulement du mécanisme d'enroulement (22) et qui possède une partie fixe (26) et une partie mobile (27) ; dans lequel la partie mobile (27) possède dans une position ouverte et une position fermée, et la position fermée obture un évidement (28) dans la partie fixe (26) qui est destiné à renfermer au moins une partie de la seconde réserve (16).

14. Dispositif selon la revendication 13, **caractérisé en ce qu'**un support d'enroulement (31) est prévu à côté de l'attache (23) qui maintient au moins en partie la seconde réserve (16) à l'écart de l'attache (23) jusqu'au moment où l'attache (23) a saisi la seconde réserve (16).

15. Procédé pour équiper une pépinière de tomates avec un jeu de crochets pour tomates suspendus à partir d'une structure de suspension, qui comprennent chacun un dispositif de maintien (2) et un cordon (3) fixé au dispositif de maintien (2) ; dans lequel le cordon (3) possède deux réserves, respectivement une première réserve (15) qui est fixée complètement (17) autour d'un mandrin d'enroulement (5) du dispositif de maintien (2) en enroulements, et qui est destinée à être systématiquement déroulée, et une seconde réserve (16) d'une longueur déterminée de cordon, qui pend de manière lâche à partir du dispositif de maintien (2), **caractérisé en ce qu'**un jeu de crochets pour tomates (1) selon la revendication 1 est suspendu à la structure de suspension, et la seconde réserve (16) de chaque dispositif de maintien (2) est libérée.
